# EUROPÄISCHE PATENTSCHRIFT

(11) **EP 0 531 879 B1**
(45) Veröffentlichungstag und Bekanntmachung des Hinweises auf die Patenterteilung: **24.04.1996**
(21) Anmeldenummer: 92115038.9
(22) Anmeldetag: 03.09.1992
(51) Int. Cl.: B23D 65/00, B23D 61/12

(54) **Sägebandring und Verfahren zu seiner Herstellung**
Band saw blade and method for its manufacture
Lame de scie à ruban et procédé pour sa fabrication

(30) Priorität: 13.09.1991 DE 4130521
(43) Veröffentlichungstag der Anmeldung: 17.03.1993
(73) Patentinhaber: WIKUS-Sägenfabrik Wilhelm H. Kullmann, D-34286 Spangenberg (DE)
(72) Erfinder: Fluhrer, Manfred, Dipl.-Ing., W-3509 Spangenberg (DE)
(74) Vertreter: Rehberg, Elmar, Dipl.-Ing.

(56) Entgegenhaltungen:
- DE-C- 395 530
- FR-A- 1 270 111
- US-A- 1 503 310
- US-A- 5 033 723

## Beschreibung

Die Erfindung bezieht sich auf einen Sägebandring aus einem zusammengefügten stumpfgeschweißten Abschnitt eines Sägebands gemäß Oberbegriff von Patentanspruch 1 und zeigt gleichzeitig ein Verfahren zur Herstellung solcher Sägebandringe aus Abschnitten von Sägebändern, wobei senkrecht zur Bandlängsrichtung endende Abschnitte unter Berücksichtigung eines Fügeverluste, abgelängt und deren beide Enden durch ein Stumpfschweißen, unter Berücksichtigung des Abbrandes, miteinander verbunden werden. Unter einem Sägeband wird ein langgestrecktes, quasi endloses Band, an dem auf der dem Bandrücken abgekehrten Seite Zahne ausgebildet sind, verstanden. Ein Sägebandring stellt einen Abschnitt aus einem solchen Sägeband dar, dessen beide Enden zusammengefügt sind, so daß ein endloser ringförmiger Körper entsteht.

Es ist in der Praxis bekannt, derartige Sägebandringe aus Abschnitten von Sägebändern dadurch herzustellen, daß zunächst die Ablängung in die Abschnitte erfolgt und jeder Abschnitt mit seinen beiden Enden durch Stumpfschweißen miteinander verbunden wird. Beim Stumpfschweißen wird das Metall des Abschnitts im Bereich der beiden Enden durch Stromeinwirkung verflüssigt und in weiteren Bereichen in einen teigigen Zustand überführt, worauf die beiden Enden so vorbereitet stumpf gegeneinander gepreßt werden. Infolge des unvermeidlichen Abbrands, der in der Größenordnung von etwa 3 mm Länge an jedem Ende des Abschnitts liegen kann, wird der Umfang des Sägebandrings um den Abbrand kleiner, als es der abgelängten Länge des Abschnitts entspricht. Es entsteht eine Schweißnaht, wobei das überstehende Material insbesondere durch einen Schleifvorgang entfernt wird. Das Ablängen der Abschnitte von dem Sägeband erfolgt dabei in der Weise, also unter Berücksichtigung des Abbrands, daß die sich beim Stumpfschweißen bildende Schweißnaht im Bereich der tiefsten Stelle des Zahngrunds liegt. Die Einschweifung zwischen zwei Zähnen, also die Zahnlücke, kann in drei Bereiche unterteilt werden, nämlich den Zahnrücken, den Zahngrund und die Zahnbrust. Im Bereich des Zahnrückens und der Zahnbrust liegen erhebliche Höhenunterschiede des Sägebands pro Längeneinheit vor, während diese Differenzen im Bereich des Zahngrunds geringer sind.

Vielfach stellt der Zahngrund einen gerundeten Bereich dar, der eine tiefste Stelle besitzt, also eine Stelle, an welcher die Höhe des Sägebands minimal ist. Es gibt auch Zahnlückenformen, bei denen die tiefste Stelle im Zahngrund nicht nur punktförmig ausgebildet ist, sondern sich über eine gewisse axiale Erstreckung hinzieht. Die Ablängung wird im Stand der Technik so ausgerichtet, daß die sich bildende Schweißnaht bzw. Fügezone am tiefsten Punkt des Zahngrunds liegt. Die Anordnung der Fügezone an dieser Stelle ist nach Auffassung der Fachwelt aus einer ganzen Reihe von Gründen sinnvoll. Beim Zusammenfügen werden Bereiche miteinander verbunden, die praktisch keinen Höhenunterschied aufweisen. Es liegen also in beiden Enden gleichsam etwa volumengleiche Materialbereiche vor, die somit auch gleichmäßig erwärmt und gleichmäßig Zusammengefügt werden können. Die Zähne, die in den Endbereichen der Abschnitte vorgesehen sind, werden durch das Zusammenfügen nicht beeinträchtigt. So soll der beispielsweise gehärtete Zahn durch die Erwarmung beim Zusammenfügen in seiner Härte möglichst wenig beeinflußt werden, also dessen Härte möglichst wenig abgebaut werden. Wenn geschränkte Zähne vorliegen, wird durch die Anordnung der Schweißnaht an der tiefsten Stelle des Zahngrunds dafür Sorge getragen, daß nur fluchtend zueinander ausgerichtete Materialbereiche miteinander verbunden werden. Schließlich gestaltet sich auch das Ablängen, welches durch einen Schneid-, Schleif- oder Stanzvorgang ausgeführt wird, in der Weise, daß dabei keine gehärteten Bereiche des Sägebands durchtrennt werden müssen, sondern die Trennung in einem Bereich des Sägebands erfolgt, in welchem duktiles Material vorliegt. Die Anordnung der Schweißnaht im Bereich der tiefsten Stelle des Zahngrunds hat auch den Vorteil, daß die benachbarten Zähne frei von Gefügestörungen, die durch das Stumpfschweißen verursacht sind, bleiben.

Als nachteilig wird dabei in Kauf genommen, daß die durch die Anordnung der Schweißnaht verursachte Gefügestörung an einer solchen Stelle des Sägebands liegt, die einen minimalen Querschnitt zur Verfügung stellt. Da die Beanspruchungen des Sägebandrings in der Bandsägemaschine beim Umlauf um die Rollen erheblich sind, besteht die Gefahr von Bandbrüchen an dieser Stelle. Das Sägeband wird durch die Bandspannung und den Umlauf um die Laufrollen bei einer Vertikalbandsägemaschine einer Zug- und Biegebeanspruchung unterworfen.Bei einer Horizontalbandsägemaschine tritt überwiegend zusätzlich eine Verdrehung des Sägebands als Beanspruchung hinzu, so daß sich eine zusammengesetzte Zug-/Biege-/Torsions-Beanspruchung ergibt. Diese Beanspruchungen sind dort am größten, wo der Querschnitt des Bands am kleinsten ist, also genau im Bereich des tiefsten Punkts des Zahngrunds, an der die Schweißnaht bzw. Fügezone untergebracht ist.

Die DE 395 530 zeigt eine breite Bandsäge, bei der Abschnitte eines Sägebandes von beliebiger Größe derart zusammengesetzt sind, daß die miteinander verbundenen Kanten, also beispielsweise die Schweißnaht, in einem schrägen Winkel zur Längskante des Sägeblattes liegt. Die Fügezone beginnt damit auf der Zahnseite des Bandes an irgendeiner Stelle zwischen zwei Zähnen und erstreckt sich schräg über die Breite bzw. Höhe des Sägebandes bis zum Bandrücken. Damit wird die Fügezone länger gestaltet, als es der Bandbreite bzw. Bandhöhe entspricht.

Der Erfindung liegt die Aufgabe zugrunde, einen Sägebandring der eingangs beschriebenen Art sowie ein Verfahren zu seiner Herstellung bereitzustellen, bei dem die Haltbarkeit der Fügezone, insbesondere der Schweißnaht, und die Standzeit des Sägebandrings verbessert sind.

Erfindungsgemäß wird dies bei einem Sägebandring der eingangs beschriebenen Art dadurch erreicht, daß der Sägebandring die Fügezone im Bereich des Zahnrückens aufweist und daß der Sägebandring im Bereich der tiefsten Stelle des Zahngrundes benachbart zu der Fügezone ein von der Stumpfschweißung unbeeinflußtes Gefüge aufweist. Die Erfindung setzt sich in Gegensatz zum lange praktizierten Stand der Technik und ordnet die Fügezone an grundsätzlich anderer Stelle an. Die Fügezone wandert damit aus dem engsten Querschnitt, der sich an der tiefsten Stelle des Zahngrunds befindet, heraus, und zwar in einen Bereich, der etwa zwischen der tiefsten Stelle des Zahngrunds und der Zahnspitze liegen kann.

Vorteilhaft ist es hierbei, die Fügezone im Bereich des Zahnrückens anzuordnen, weil in diesem Bereich die Höhenunterschiede der verschiedenen, miteinander zu verbindenden Querschnitte weniger groß sind als im Bereich der Zahnbrust. Die Lage der Fügezone befindet sich an einer solchen Stelle, daß das homogene Gefüge des Sägebands im Bereich der tiefsten Stelle des Zahngrunds auch bei dem Sägebandring unbeeinflußt bleibt. Erstaunlicherweise treten bei einem dergestalt ausgebildeten Sägebandring Bandbrüche in weit geringerem Maße auf, d. h. es kann eine größere Toleranz bei der Herstellung der Fügeverbindung zugelassen werden. Völlig unerwartet steigt darüberhinaus noch die Standzeit des Sägebandrings vorteilhaft an. Bei der Anordnung der Lage der Fügezone sollte es eher in Kauf genommen werden, das Gefüge im Bereich des Zahns zu beeinträchtigen, denn eine Beeinträchtigung an der tiefsten Stelle des Zahngrunds zu haben. Da ein Sägebandring eine große Anzahl von Zähnen aufweist, ist es nicht schädlich, wenn die Härte eines Zahns durch die Anordnung der Fügezone gegenüber sämtlichen anderen Zähnen etwas abfällt. Wichtig ist dagegen, daß der engste Querschnitt im Bereich der tiefsten Stelle des Zahngrunds im Bereich jeder Zahnlücke gleiche Eigenschaften hat, damit die im Stand der Technik vorhandene Schwachstelle beseitigt ist. Die durch die Ausbildung des Zahngrunds hervorgerufene Kerbwirkung bei Biegebeanspruchung des Sägebandrings oder bei kombinierter Zug-/Biege-/Torsions-Beanspruchung wirkt sich auf den engsten Querschnitt, also an tiefsten Punkt des Zahngrunds, aus; dort ist jedoch im Bereich sämtlicher Zahnlücken und insbesondere der die Fügezone aufweisenden Zahnlücke ein gleiches Gefüge und damit gleiche Verhältnisse gegeben, so daß sich Bandeinrisse nicht mehr auf die die Fügezone tragende Zahnlücke konzentrieren, sondern bei entsprechend langer Gebrauchsdauer in statistischer Verteilung auftreten.

Bei einem Sägebandring mit geschränkten Zähnen ist es zweckmäßig, wenn die Fügezone außerhalb der Schränkung der Zähne angeordnet ist.

Das Verfahren der eingangs beschriebenen Art zur Herstellung eines solchen Sägebandrings kennzeichnet sich erfindungsgemäß dadurch, daß die Ablängung im Bereich des Zahnrückens erfolgt, und daß die nach dem Fügen sich ergebende Fügezone an eine solche Stelle gelegt wird, daß den homogen Gefüge des Sägebandes im Bereich der tiefsten Stelle des Zahngrundes unbeeinflußt bleibt. Damit werden eingefahrene Herstellungswege von Sägebandringen im jahrzehntelang praktizierten Stand der Technik verlassen. Es wird nicht mehr der Zahngrund ausgenutzt, an dem an sich vorteilhaft nur geringe Höhenunterschiede im Sägeband pro Längeneinheit vorliegen, sondern es wird eine Stelle für die Anordnung der Fügezone gesucht, bei der in an sich widersinniger Weise relativ große Höhenunterschiede pro Längeneinheit auftreten, so daS beim Fügen unterschiedliche Querschnitte und Volumina zu behandeln, insbesondere zu erwärmen, sind. Die dabei zu erwartenden Schwierigkeiten haben die Fachwelt bisher offensichtlich davon abgehalten, diesen unkonventionellen Schritt auszuführen. Da aber die sich durch den Abbrand und das Zusammendrücken der Enden der Abschnitte ergebende Wulst ohnehin abgearbeitet werden muß, was insbesondere durch Schleifen durchgeführt wird, können die zu erwartenden Schwierigkeiten diesbezüglich in Kauf genommen und gelöst werden.

Die Ablängung erfolgt unter Berücksichtigung des Fügeverlusts, insbesondere des Abbrands beim Stumpfschweißen, an solchen Stellen, daß die sich nach dem Fügen ergebende Fügezone, insbesondere Schweißnaht, im Bereich des Zahnrückens liegt. Unter dem Zahnrücken wird der mehr oder weniger gerade gestaltete Bereich auf der Rückseite des Zahns, also gleichsam der erste Bereich der Zahnlücke, verstanden, an den sich der Zahngrund mit seiner gerundeten Form anschließt, der dann seinerseits wiederum in die Zahnbrust übergeht. Bei Zähnen mit negativem Spanwinkel bietet zwar auch die Zahnbrust eine Möglichkeit, hier die Fügezone außerhalb des Zahngrunds und insbesondere der tiefsten Stelle des Zahngrunds zu plazieren, jedoch liegen hier größere Höhendifferenzen je Längeneinheit vor, so daß der Zahnrücken die bevorzugte Stelle ist, an der die Fügezone plaziert wird.

Weiterhin wird bei dem Sägeband mit gehärteten Zähnen oder Zähnen aus einem im Vergleich zum Material des Trägerbands härteren Material die Ablängung an eine solche Stelle im Bereich des Zahnrückens gelegt, daß auch das Gefüge im Bereich der benachbarten Zahnspitze möglichst wenig beeinflußt wird.

Die Fügezone sollte weiterhin außerhalb des am stärksten bei Zug- und/oder Biegung und/oder Torsion belasteten Querschnitts des Sägebands liegen, wobei hier nicht nur der Zahngrund zu berücksichtigen ist, sondern auch Bereiche in der Nähe der Zahnspitze, also an einem Querschnitt, über den unterschiedlich harte Materialien vorliegen.

Die Erfindung läßt sich grundsätzlich bei sämtlichen Sägebändern anwenden, unabhängig von Zahnform, Schränkungsart, konstanter oder variabler Teilung und dementsprechender Einschweiftiefe usw.. Bei einem Sägeband mit variabler Teilung und entsprechend variabler Einschweiftiefe sollte die Ablängung im Bereich von Zähnen mit kleiner Teilung und damit geringer Einschweiftiefe erfolgen. Ein solcher Sägebandring weist zwar an der Stelle einer Zahnlücke mit großer Teilung und entsprechend großer Einschweiftiefe einen kleineren Querschnitt im Bereich des tiefsten Punkts des Zahngrunds auf als im Bereich der Zahnlücke, an der die Fügezone angeordnet ist, jedoch wirkt sich auch hier die besondere Anordnung der Fügezone vorteilhaft aus. Die Kerbwirkung an dem tiefsten Punkt des Zahngrunds wird vermieden.

Von Vorteil ist es, wenn die Ablängung an eine solche Stelle gelegt wird, daß die sich nach dem Fügen ergebende Fügezone auf etwa halber Entfernung zwischen Zahngrund und Zahnschneide liegt. Damit ist eine Lage aufgezeigt, bei der einerseits der Zahngrund und andererseits die Zahnspitze durch den Fügevorgang möglichst wenig beeinträchtigt werden.

Insbesondere bei kleiner Teilung kann vor dem Fügen zumindest an einem Ende des Abschnitts des Sägebands ein Zahn bis in den Bereich des Trägermaterials entfernt werden. Dabei wird der Zahn in Längsrichtung des Sägebands so abgeschnitten, daß das gehärtete oder härtere Material entfernt wird, so daß beim Fügevorgang nur duktiles Trägermaterial miteinander verbunden werden muß.

Die Erfindung wird anhand bevorzugter Ausführungsbeispiele weiter beschrieben und verdeutlicht. Es zeigen:
- Figur 1: einen Ausschnitt eines Sägebandrings im Bereich der Fügezone,
- Figur 2: die Verdeutlichung der Lage der Schnittstellen unter Berücksichtigung des Abbrands,
- Figur 3: die Enden des gebildeten Abschnitts vor dem Fügen,
- Figur 4: eine Ansicht eines Teils eines Sägebands mit der Lage der Schnittstellen,
- Figur 5: die beiden Enden eines für die Erstellung eines Sägebandrings vorgesehenen Abschnitts aus dem Sägeband gemäß Figur 4 vor dem Fügen,
- Figur 6: die Ansicht des Sägebandrings im Bereich der Fügezone,
- Figuren 7 - 9: ähnliche Darstellungen wie die Figuren 4 bis 6 für große Teilung relativ zum Abbrand,
- Figuren 10 - 12: eine ähnliche Darstellung für kleine Teilung und
- Figuren 13 - 15: verschiedene Verfahrensschritte bei sehr kleinen Teilungen, bei denen der Gesamtabbrand etwa in Größe der Teilung liegt.

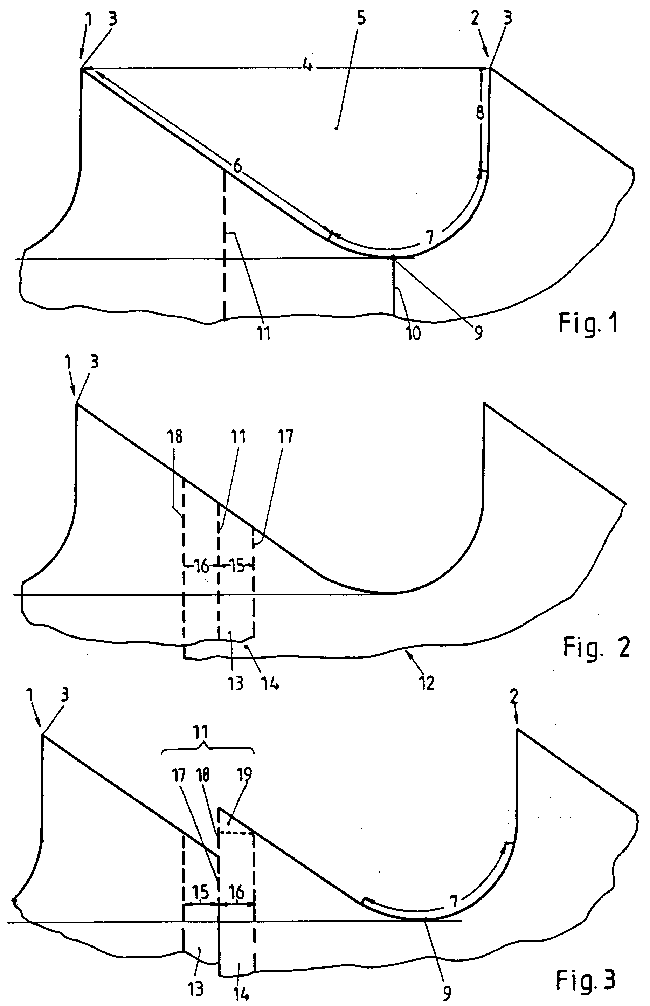

In Figur 1 ist ein Ausschnitt aus einem Sägeband dargestellt, wobei nur zwei aufeinanderfolgende Zähne 1, 2 verdeutlicht sind. Die Zähne 1 und 2 weisen jeweils eine Zahnschneide 3 auf. Zwischen zwei benachbarten Zahnschneiden 3 erstreckt sich jeweils eine Zahnlücke 4, die durch eine Einschweifung 5 gebildet ist. Die Einschweifung 5 wird begrenzt durch einen Zahnrücken 6, einen Zahngrund 7 und eine Zahnbrust 8. Der Zahngrund 7 besitzt eine tiefste Stelle 9, an der sich die Einschweifung 5 maximal in das Material des Sägebands hinein erstreckt. Die tiefste Stelle 9 ist gleichzeitig die Stelle, an der das Band einen minimalen Querschnitt 10 aufweist. Bisher wurde die Fügezone, insbesondere in Form einer Schweißnaht, an der tiefsten Stelle 9 bzw. im Bereich des minimalen Querschnitts 10, im Zahngrund 7 angeordnet. Nach der vorliegenden Erfindung liegt die gestrichelt verdeutlichte Fügezone 11, insbesondere Schweißnaht, außerhalb der tiefsten Stelle 9 des Zahngrunds 7 im Bereich des Zahnrückens 6. Vorteilhaft ist es, wie dargestellt, die Fügezone 11 etwa auf halber Strecke zwischen Zahnschneide 3 und tiefsten Stelle 9 des Zahngrunds 7 anzuordnen - in Bandlängsrichtung gesehen -, um die durch das Fügen verursachte Veränderung im Gefüge des Bandmaterials in seiner Auswirkung auf die Zahnschneide 3 einerseits und den engsten Querschnitt 10 andererseits minimal zu halten.

Figur 2 zeigt nochmals die Lage der vorgesehenen Fügezone 11, jedoch hier bereits relativ an einem Sägebandring 12 mit den beiden Enden 13 und 14 des gebildeten Abschnitts. Das von links hereinreichende Ende 13 befindet sich unter Berücksichtigung seines Abbrands 15 rechts von der vorgesehenen Fügezone 11. Das von rechts hereinreichende Ende 14 befindet sich links von der Fügezone 11, entsprechend seinem Abbrand 16. Man erkennt, daß die Kanten 17 und 18 der beiden Enden 13 und 14 unterschiedliche Höhe (quer zur Bandlängsrichtung) aufweisen, so daß hier auch unterschiedliche, miteinander zu verbindende Querschnitte vorliegen und unterschiedliche Volumina, z. B. beim Stumpfschweißen, zu erwärmen sind.

Figur 3 verdeutlicht die Lage der beiden Enden 13 und 14 des Abschnitts, aus dem der Sägebandring 12 erstellt wird, vor dem Fügevorgang. Man erkennt deutlich, daß unterschiedlich lange Kanten 17 und 18 miteinander verbunden werden müssen. Bei großer Teilung entsprechender Länge der Zahnlücke 4 ist das Volumen des Abbrands im Bereich des Endes 14 verhältnismäßig klein zum Volumen eines ganzen Zahns und muß daher nicht zusätzlich reduziert werden. Mit anderen Worten kann eine Spitze 19 im Bereich des Endes 14, die durch eine gepunktete Linie eingegrenzt ist, stehenbleiben und muß nicht gesondert vor dem Fügevorgang entfernt werden. Es versteht sich, daß nach dem Erwärmen und Zusammenschieben der beiden Enden 13 und 14 die Fügezone 11 als eine Zone geringer Ausdehnung in Bandlängsrichtung entsteht, wie dies etwa anhand von Figur 1 ersichtlich ist. Die Fügezone 11 besitzt eine Ausdehnung in Bandlängsrichtung von Bruchteilen eines mm, während der Abbrand 15 oder der Abbrand 16 in der Größenordnung von 3 mm liegen kann, so daß sich ein Gesamtabbrand von 6 mm ergibt.

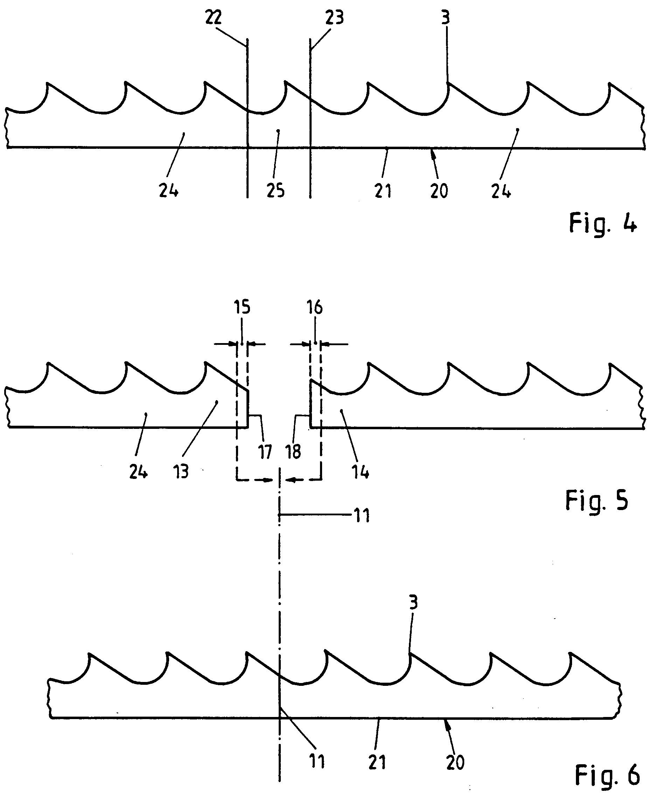

Die anhand der Figuren 1 bis 3 geschilderten Verhältnisse bzw. Herstellungsschritte sind anhand der Figuren 4 bis 6 nochmals verdeutlicht. Figur 4 zeigt einen Ausschnitt aus einem Sägeband 20, und zwar in einem Bereich, in welchem das Sägeband zur Bildung von Abschnitten unterteilt werden soll. Die Zähne Und die Tiefe der Einschweifung 5 sind hier übertrieben groß gegenüber der Bandhöhe vom Bandrücken 21 bis zur Zahnschneide 3 dargestellt. Das Sägeband 20 als quasi endloses Band mit beispielsweise einer Herstellungslänge von 50 m wird immer wiederkehrend durch zwei Schnitte 22 und 23 durchtrennt, wobei einerseits Abschnitte 24 in der vorgesehenen Länge entsprechend dem Umfang des aus den Abschnitten herzustellenden Sägebandrings 12 und andererseits Abfallstücke 25 entstehen.

Figur 5 zeigt die beiden Enden 13 und 14 mit den Kanten 17 und 18 sowie dem gestrichelt angedeuteten Abbrand 15 bzw. 16. Die beiden Enden 13 und 14 werden im Bereich des vorgesehenen Abbrands 15 und 16 erwärmt und zusammengeschoben, wobei die sich bildende Wulst abgearbeitet wird, auch im Bereich des Zahnrückens 6 einerseits und des Bandrückens 20 andererseits. Es entsteht somit die Fügezone 11 an der vorgesehenen Stelle, wie dies Figur 6 zeigt. Dabei sind die Schnitte 22 und 23 (Figur 4) so unter Berücksichtigung des Abbrands gelegt, daß die Teilung auch im Bereich der Fügezone eingehalten wird. Es handelt sich beispielsweise um ein Sägeband bzw. Sägebandring mit konstanter Teilung. Wenn auf diese konstante Teilung Wert gelegt wird, müssen zwei Schnitte 22 und 23 unter Bildung des Abfallstücks 25 in Kauf genommen werden.

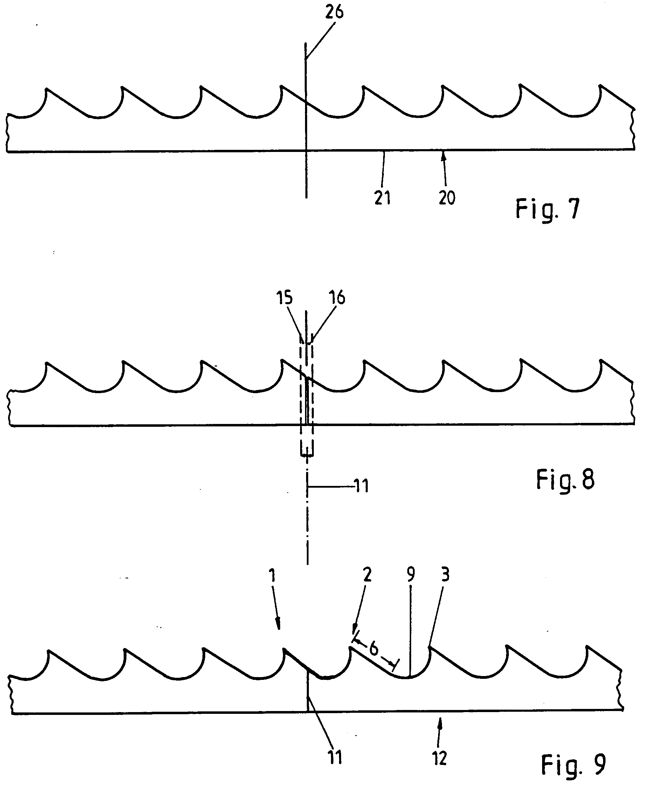

Figuren 7 bis 9 verdeutlichen das Zusammenfügen der Enden eines Abschnitts, wobei die Abschnitte nur durch einen einzigen Schnitt 26 gebildet werden, also keine Abfallstücke 25 entstehen. Insbesondere bei großer Teilung, die relativ zum Abbrand groß ist, kann die Verkürzung der Teilung, die die Fügezone 11 einschließt, in Kauf genommen werden, wie dies die Figuren 7 bis 9 verdeutlichen.

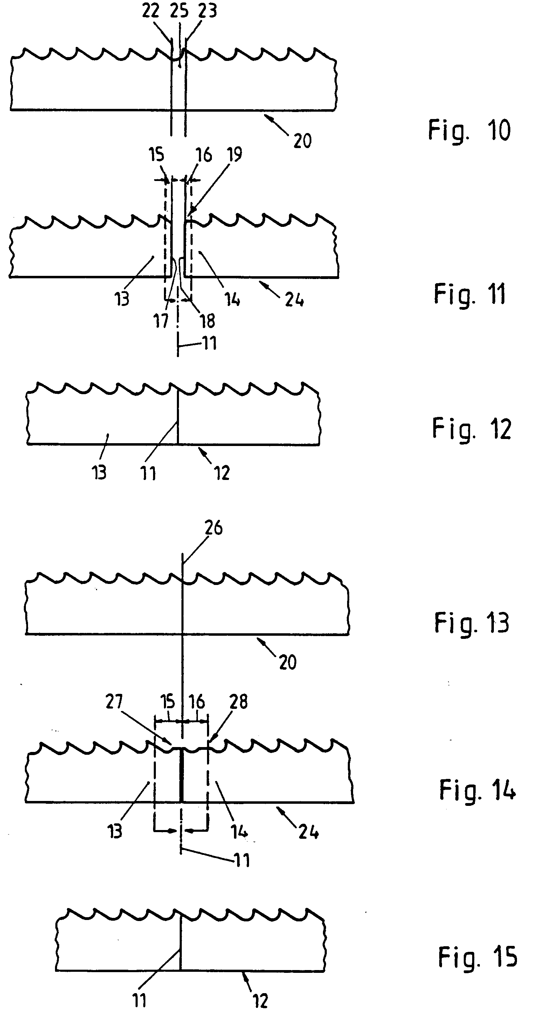

Die Figuren 10 bis 12 verdeutlichen die Herstellungsschritte eines Sägebandrings 12, bei dem die Teilung zwar immer noch groß gegenüber dem Gesamtabbrand ist. Die Teilung kann etwa doppelt so groß sein wie der Gesamtabbrand. Um einen Sägebandring 12 zu erhalten, der auch im Bereich seiner Fügezone 11 die gleiche Teilung wie an seiner sonstigen Längserstreckung aufweist, müssen hier wiederum zwei Schnitte 22 und 23 unter Bildung des Abfallstücks 25 geführt werden. Zusätzlich muß noch oder kann noch eine Spitze 19 (Figur 3) im Bereich des Endes 14 entfernt werben.

Die Folge der Figuren 13 bis 15 verdeutlicht die Herstellung eines Sägebandrings 12 im Bereich der Fügezone 11, wenn der Gesamtabbrand etwa der doppelten Teilung entspricht. Dies kann bei Sägebändern 20 mit vergleichsweise kleiner Teilung der Fall sein. Unter Anwendung eines einzigen Schnitts 26 und Vermeidung des Abfallstücks 25 müssen hier einmal im Bereich des Endes 13 ein Zahn 27 und im Bereich des Endes 14 ein Zahn 28 entfernt werden. Der Abbrand 15 am Ende 13 und der Abbrand 16 am Ende 14 sind wiederum verdeutlicht, so daß auch hier nach dem Zusammenschieben der Enden 13 und 14 die Fügezone 11 gemäß Figur 15 so entsteht, daß auch in ihrem Bereich bzw. ihrer Zahnlücke die Teilung eingehalten ist. Wenn die Teilung in etwa eingehalten wird, genügt dies. Entspricht der Gesamtabbrand der einfachen Teilung oder einen ganzzahligen Vielfachen der Teilung, so ist ebenfalls nur ein Schnitt zum Ablängen erforderlich.

### Bezugszeichenliste:

- 1: = Zahn
- 2: = Zahn
- 3: = Zahnschneide
- 4: = Zahnlücke
- 5: = Einschweifung
- 6: = Zahnrücken
- 7: = Zahngrund
- 8: = Zahnbrust
- 9: = tiefste Stelle
- 10: = minimaler Querschnitt
- 11: = Fügezone
- 12: = Sägebandring
- 13: = Ende
- 14: = Ende
- 15: = Abbrand
- 16: = Abbrand
- 17: = Kante
- 18: = Kante
- 19: = Spitze
- 20: = Sägeband
- 21: = Bandrücken
- 22: = Schnitt
- 23: = Schnitt
- 24: = Abschnitt
- 25: = Abfallstücke
- 26: = Schnitt
- 27: = Zahn
- 28: = Zahn

## Patentansprüche

1. Sägebandring (12) aus einem zusammengefügten stumpfgeschweißten Abschnitt eines Sägebands (20) mit gehärteten Zähnen (1, 2) oder Zähnen aus einer im Vergleich zum Material des Trägerbands härteren Material mit einer senkrecht zur Bandlängsrichtung verlaufenden Fügezone (11), **dadurch gekennzeichnet**, daß der Sägebandring (12) die Fügezone (11) im Bereich des Zahnrückens (6) aufweist, und daß der Sägebandring (12) im Bereich der tiefsten Stelle (9) des Zahngrundes (7) benachbart zu der Fügezone (11) ein von der Stumpfschweißung unbeeinflußtes Gefüge aufweist.

2. Sägebandring nach Anspruch 1, **dadurch gekennzeichnet**, daß die Fügezone (11) im Bereich des Zahnrückens (6) etwa zwischen der tiefsten Stelle (9) des Zahngrundes (7) und der Zahnschneide (3) angeordnet ist.

3. Sägebandring nach Anspruch 1 oder 2, **dadurch gekennzeichnet**, daR die Fügezone (11) außerhalb der Schränkung der Zähne (1, 2) angeordnet ist.

4. Verfahren zur Herstellung von Sägebandringen nach einem der Ansprüche 1 bis 3, aus einem Sägeband (20), wobei senkrecht zur Bandlängsrichtung endende Abschnitte unter Berücksichtigung eines Fügeverlustes abgelängt und deren beide Enden durch ein Stumpfschweißen, unter Berücksichtigung des Abbrandes, miteinander verbunden werden, **dadurch gekennzeichnet**, daß die Ablängung im Bereich des Zahnrückens (6) erfolgt, und daß die nach dem Fügen sich ergebende Fügezone (11) an eine solche Stelle gelegt wird, daß das homogene Gefüge des Sägebandes im Bereich der tiefsten Stelle (9) des Zahngrundes (7) unbeeinflußt bleibt.

5. Verfahren nach Anspruch 4, **dadurch gekennzeichnet**, daß die Ablängung an eine solche Stelle im Bereich des Zahnrückens (6) gelegt wird, daß auch das Gefüge im Bereich der benachbarten Zahnspitze (3) möglichst wenig beeinflußt wird.

6. Verfahren nach Anspruch 4 oder 5, **dadurch gekennzeichnet**, daß die Ablängung an eine solche Stelle gelegt wird, daß die Fügezone (11) außerhalb des am stärksten bei Biegung und/oder Torsion belasteten Querschnitts des Sägebandrings (12) liegt.

7. Verfahren nach einem der Ansprüche 4 bis 6, **dadurch gekennzeichnet**, daß bei einem Sägeband (20) mit variabler Teilung und entsprechend variabler Einschweiftiefe die Ablängung im Bereich von Zähnen (1, 2) mit kleiner Teilung und damit geringer Einschweiftiefe erfolgt.

8. Verfahren nach einem der Ansprüche 4 bis 7, **dadurch gekennzeichnet**, daß die Ablängung an eine solche Stelle gelegt wird, daR die sich nach dem Fügen ergebende Fügezone (11) auf etwa halber Entfernung zwischen Zahngrund (7) und Zahnschneide (3) liegt.

## Claims

1. Band saw blade (12) made from a section of a butt-welded band saw strip (20) having hardened teeth (1, 2) or teeth made from a material which is harder than the material of the band, having a joint zone (11) extending perpendicular to the longitudinal direction of the band, **wherein** the band saw blade (12) comprises the joint zone (11) in the region of the tooth back (6), and the band saw blade (12) has a texture in the region of the deepest point (9) of the tooth bottom (7) which is not influenced by the butt-welding.

2. The band saw blade of claim 1, **wherein** the joint zone (11) in the region of the tooth back (6) is positioned about half the way between the deepest point (9) of the tooth bottom (7) and the cutting edge (3).

3. The band saw blade of claim 1 or 2, **wherein** the joint zone (11) is positioned apart of the region of a set of the teeth (1, 2).

4. Method for the manufacture of band saw blades of one of the claims 1 to 3, made from a band saw strip (20), whereby sections ending perpendicular to the longitudinal direction of the band are cut with respect to a reduction in length and its both ends are connected to each other by butt-welding with respect to the consumption loss, **wherein** the cutting is performed at the region of the tooth back (6), and the joint zone (11) resulting from the connecting procedure is positioned at such a place in which the homogeneous texture of the band saw blade remains without any influence in the region of the deepest point (9) of the tooth bottom (7).

5. The method of claim 4, **wherein** the cutting is performed at a place in the region of the tooth back (6) so that the texture in the region of the cutting edge (3) is influenced as little as possible.

6. The method of claim 4 or 5, **wherein** the cutting is performed at a place so that the joint zone (11) is positioned with distance to the most stressed cross section of the band saw blade (12) loaded by deflection and/or torsion.

7. The method of one of the claims 4 to 6, **wherein** concerning a band saw strip (20) with variable pitch the cutting is performed in the region of teeth (1, 2) having a small pitch and thus small deepness of recess.

8. The method of one of the claims 4 to 7, **wherein** the cutting is performed at a place so that the joint zone (11) resulting from the connecting procedure is positioned about half the way between the tooth bottom (7) and the cutting edge (3).

## Revendications

1. Boucle de ruban de scie (12) faite d'une portion, assemblée, soudée bout à bout, d'un ruban de scie (20) avec dents (1, 2) trempées ou dents faites d'un matériau plus dur que le matériau du ruban de support, avec une zone de joint (11) s'étendant perpendiculairement à la direction longitudinale de ruban, caractérisée en ce que la boucle de ruban de scie (12) présente la zone de joint (11) dans la région du dos (6) de la dent, en ce que la boucle de ruban de scie (12) présente, dans la région du point (9) le plus bas du fond (7) de la dent, à proximité de la zone de joint (11), une texture non influencée par la soudure bout à bout.

2. Boucle de ruban de scie selon la revendication 1, caractérisée en ce que la zone de joint (11) dans la région du dos (6) de la dent, est placée entre le point (9) le plus bas du fond (7) de la dent et le tranchant (3) de la dent.

3. Boucle de ruban de scie selon la revendication 1 ou 2, caractérisée en ce que la zone de joint (11) est située à l'extérieur de la voie des dents (1, 2).

4. Procédé de fabrication de boucle de ruban de scie selon l'une des revendications 1 à 3, à partir d'un ruban de scie (20), des portions, se terminant perpendiculairement à la direction longitudinale du ruban, étant mises à longueur en tenant compte d'une perte pour joint, et dont les deux extrémités sont assemblées entre elles par une soudure bout à bout, en tenant compte de l'usure, caractérisé en ce que la mise à longueur s'effectue dans la région du dos (6) de la dent, et en ce que la zone de joint (11), résultant après l'assemblage, est située en un point tel que la texture homogène du ruban de scie reste non influencée dans la région du point (9) le plus bas du fond (7) de la dent.

5. Procédé selon la revendication 4, caractérisé en ce que la mise à longueur se situe en un point, dans la région du dos (6) de la dent, telle que la texture dans la région de la pointe de dent (3) voisine, soit également aussi peu influencée que possible.

6. Procédé selon la revendication 4 ou 5, caractérisé en ce que la mise à longueur est placée en un point tel que la zone de joint (11) se situe à l'extérieur de la section transversale de la boucle de ruban de scie (12), le plus fortement sollicitée lors de la flexion et/ou de la torsion.

7. Procédé selon l'une des revendications 4 à 6, caractérisé en ce que dans le cas d'un ruban de scie (20) à division variable et profondeur d'échancrure variable en conséquence, la mise à longueur s'effectue dans la région de dents (1, 2) avec petite division et donc profondeur d'échancrure réduite.

8. Procédé selon l'une des revendications 4 à 7, caractérisé en ce que la mise à longueur est placée en un point tel que la zone de joint (11), résultant après l'assemblage, se situe à environ mi-distance entre le fond (7) et le tranchant (3) de la dent.
